# EUROPÄISCHE PATENTSCHRIFT

(11) **EP 1 387 011 B1**
(45) Veröffentlichungstag und Bekanntmachung des Hinweises auf die Patenterteilung: **18.06.2008**
(21) Anmeldenummer: 03017214.2
(22) Anmeldetag: 29.07.2003
(51) Int. Cl.: E02D 31/00, B65D 90/24

(54) **Auffangsystem mit Kohlenwasserstoffabsorber für Fahrzeugstellplätze**
System for avoiding spillage of hydrocarbons for vehicle parkings
Absorbeur d' hydrocarbures pour des parcs de stationnement de véhicules

(30) Priorität: 02.08.2002 DE 10235446
(43) Veröffentlichungstag der Anmeldung: 04.02.2004
(73) Patentinhaber: WECO BAHNÜBERWEGE- UND AUFFANGWANNENBAU GMBH, 54329 Konz-Könen (DE)
(72) Erfinder: Panzer, Mike, 54516 Wittlich (DE); Schulz, Carsten, 54296 Trier (DE); Stolz, Manfred, 54550 Daun (DE)
(74) Vertreter: Körfer, Thomas

(56) Entgegenhaltungen:
- EP-A- 0 453 619
- DE-A- 4 324 729
- DE-A- 19 850 171
- GB-A- 2 317 408

## Beschreibung

Die Erfindung betrifft ein Auffangsystem nach dem Oberbegriff des Anspruchs 1 und ein Verfahren nach dem Oberbegriff des Anspruchs 24.

In der DE 43 10 182 A1 sind ein Auffangsystem und ein Verfahren zum Auffangen von Öl und Wasser beschrieben. Bei diesem vorbekannten Auffangsystem und Verfahren sind neben durch Schienen gebildeten Trägern Aufnahmekästen angeordnet, deren Böden zu mehreren einen Abstand voneinander aufweisenden Sammelrinnen geneigt sind, die mit einer Entsorgungsleitung zum Abführen des Flüssigkeitsgemisches verbunden sind. Dieses bekannte Auffangsystem ist aus mehreren Gründen nachteilig. Zum einen ist es bauaufwendig, was durch die Herstellung und Installation der Sammelrinnen und der Entsorgungsleitung bedingt ist. Außerdem ist die Entsorgung des in die Aufnahmekästen gelangenden Wasser/Ö1-Gemisches problematisch und aufwendig, da es nach einer Abführung entsorgt werden muß. Deshalb sind bei dem bekannten Auffangsystem die Herstellungs- und/oder Betriebs- bzw. Unterhaltungskosten hoch.

Ein Auffangsystem und ein Verfahren der eingangs angegebenen Arten sind auch in der DE 41 25 202 A1 beschrieben. Bei diesem gattungsgemäßen Auffangsystem und Verfahren sind neben den Schienen des Stellplatzes eine Mehrzahl Wannen nach Art eines Baukastensystems angeordnet, in denen ein Öl absorbierender Absorptionswerkstoff in Form eines ersten Absorptionsvlieses vorgesehen ist, das von mindestens einem zweiten Absorptionsvlies zumindest teilweise überdeckt ist. Der Absorptionswerkstoff soll jegliche Flüssigkeit aufnehmen. Eine Weiterführung des Wasser bzw.

Regenwassers aus den Wannen ist offenbar nicht vorgesehen. Bei diesem vorbekannten Auffangsystem und Verfahren sind deshalb die Aufnahmekapazitäten sowohl des Absorptionswerkstoffs bezüglich Öl als auch der Wannen bezüglich der anfallenden Flüssigkeitsmengen problematisch. Ein Auffangsystem entsprechend dem Oberbegriff des Anspruchs 1 ist in GB-A-2 317 408 offenbart.

Der Erfindung liegt die Aufgabe zugrunde, bei einem Auffangsystem und Verfahren der eingangs angegebenen Arten die Absorptionsfähigkeit zu verbessern und die Aufnahmekapazität des Absorbers zu vergrößern. Des weiteren soll eine längere Standzeit für den Absorber erreicht werden. Ferner soll das Auffangsystem oder das Verfahren so ausgestaltet werden, daß es mit geringerem Aufwand hergestellt und/oder betrieben bzw. unterhalten werden kann.

Diese Aufgabe wird durch die Merkmale des Anspruchs 1 bzw. 24 gelöst.

Beim erfindungsgemäßen Auffangsystem und Verfahren ist im Aufnahmeraum ein Absorber angeordnet, der Öl oder ölhaltige Flüssigkeiten absorbiert und Wasser abweist. Diese Ausgestaltung ist aus mehreren Gründen vorteilhaft:

Beim erfindungsgemäßen Auffangsystem und Verfahren wird nur das Öl oder die ölhaltige Flüssigkeit vom Absorber absorbiert, wobei das Material des Absorbers das Öl oder die ölhaltige Flüssigkeit einläßt oder einsaugt und absorbiert. Das Wasser wird dagegen vom Absorber abgewiesen und dadurch vom Öl oder der ölhaltigen Flüssigkeit getrennt, wobei es sich auf oder an der Außenfläche des Absorbers verteilen und nach unten abfließen kann. Aufgrund dieser Verteilung wird die zwischen dem Öl und dem Wasser wirksame Trennfläche vergrößert und somit zum einen die Absorptionsfähigkeit verbessert sowie zum anderen die Absorptionskapazität des Materials vergrößert. Dies ist dadurch begründet, daß das Wasser vom Absorber abgewiesen wird und nicht in diesen gelangt. Hierdurch bleibt die Absorptionskapazität für Öl oder die ölhaltige Flüssigkeit vom Wasser unbeeinträchtigt, und die Aufnahmekapazität steht der Aufnahme des Öls oder der ölhaltigen Flüssigkeit voll zur Verfügung, wobei diese im Absorber gesammelt und deponiert werden.

Bei der Ausgestaltung nach Anspruch 2 ist die Wirksamkeit des erfindungsgemäßen Überzugs groß, wenn er sich an der Oberseite des Materials befindet. Dies nicht nur deshalb, weil das Öl, die ölhaltige Flüssigkeit oder das Wasser hauptsächlich von oben zugeführt werden, sonder auch deshalb, weil der Überzug zu einer Vergleichmäßigung der Oberseite des Materials beiträgt. Hierdurch werden die Wirksamkeit der Durchlässigkeit des Überzugs für Öl oder die ölhaltige Flüssigkeit und die Absorptionsfähigkeit des Materials weiter verbessert.

Der erfindungsgemäße Überzug kann sich im Weiteren auch an einer oder mehreren, vorzugsweise allen Seitenflächen des Materials befinden. Hierdurch wird die Durchlässigkeitsund Absorptionsfläche und somit auch die Absorptionskapazität weiter vergrößert. Dies gilt auch dann, wenn das Material unterseitig mit dem Überzug versehen ist.

Bezüglich den Seitenflächen und der Unterseite des Materials sei erwähnt, daß in diesen Flächenbereichen auch beim Fehlen eines Überzugs die Gefahr des Eindringens des Wassers in das Material verringert ist, da das Wasser aufgrund der Schwerkraft geneigt ist, vom Material weg nach unten zu fließen.

Um auch im Bereich der Unterseite des Materials die Absorptionsfähigkeit des Materials und beim Vorhandensein des Überzugs auch an der Unterseite dessen Durchlässigkeit besser ausnutzen zu können, ist es vorteilhaft, an der Unterseite des Materials sowohl ohne als auch mit Überzug Furchen anzuordnen, in denen das Öl oder die ölhaltige Flüssigkeit sich auch an der Unterseite ausbreiten kann und aufgrund des Kontaktes mit der Unterseite die vorbeschriebene Trennung und Absorption stattfinden kann.

Es kann je nach Zielsetzung jedoch auch vorteilhaft sein, das Material an seiner Unterseite mit einem flüssigkeitsundurchlässigen Überzug zu versehen. Hierdurch kann insbesondere dann, wenn die Aufnahmekapazität des Materials für Öl insbesondere im unteren Bereich des Materials erschöpft ist, verhindert werden, daß Öl abgesondert wird.

Die Erfindung ermöglicht somit ein Sammeln bzw. Deponieren des Öls oder der ölhaltigen Flüssigkeit im Aufnahmeraum durch Absorption, wenn nur Öl oder ölhaltige Flüssigkeit zugeführt wird. Wenn ein Ö1/Wasser-Gemisch zugeführt wird, wird das Öl oder die ölhaltige Flüssigkeit ebenfalls absorbiert und gesammelt, wobei das Wasser abgewiesen wird. Das Abweisen erfolgt auch dann, wenn nur Wasser zugeführt wird.

Die Trennung des Öls oder der ölhaltigen Flüssigkeiten vom Wasser findet im Aufnahmeraum selbsttätig statt, nämlich während des Kontaktes und der Verteilung des Öl-Wasser-Gemisches am Absorber bzw. Überzug. Das Trenn- und Absorptionsvermögen ist unabhängig davon, ob das Öl oder die ölhaltige Flüssigkeit pur oder als Gemisch mit Wasser zum Absorber gelangt. Die Funktion ist auch dann gewährleistet, wenn der Überzug und das Material Öl oder ölhaltige Flüssigkeit bereits abgewiesen und getrennt bzw. absorbiert haben.

Der Überzug führt dann, wenn er wenigstens stellenweise mit dem Material verbunden ist, zu einer einfachen Handhabung des Materials, da es mit dem Überzug ein zusammenhängend handhabbares Bauteil bildet, das sich in einfacher Weise vorfertigen, lagern und in die Aufnahmekästen einbringen sowie wahlweise entnehmen läßt. Dies gilt insbesondere dann, wenn der Überzug das Material allseitig überdeckt und dadurch im Sinne eines Kissenüberzugs mit dem Material ein flaches Kissen bildet.

Das erfindungsgemäße Verfahren ermöglicht ebenfalls das Trennen und Sammeln des Öls bzw. der ölhaltigen Flüssigkeit im Aufnahmeraum, mit den vorbeschriebenen Vorteilen. Dabei kann der Absorber vorzugsweise benutzt werden. Es können aber auch andere Mittel zum Trennen bzw. Abscheiden und Sammeln des Öls oder der ölhaltigen Flüssigkeit benutzt werden.

Da bei der Erfindung das Wasser durch die Trennung vom Öl hinreichend gereinigt wird, bedarf es keiner Weiterbehandlung des Wassers, und es ist deshalb möglich, das Wasser in den das Auffangsystem tragenden Boden strömen zu lassen, wobei die Gefahr einer Umweltschädigung vermieden ist bzw. auf ein Maß vermindert ist, das vernachlässigbar gering ist. In Folge dessen kann bei der Erfindung ein Weiterleiten des Wassers zu einem weiteren Entsorgungssystem entfallen, so daß auch das Auffangsystem ohne Maßnahmen zum Sammeln und Weiterleiten des Wassers ausgebildet werden kann. Hierdurch werden der Herstellungs- und Montageaufwand des Auffangsystems wesentlich verringert, woraus sich auch geringe Herstellungs- und Unterhaltungskosten ergeben. Bei der Erfindung kann sich somit die Unterhaltung des Auffangsystems bzw. die Entsorgung des Öls oder der ölhaltigen Flüssigkeit darauf beschränken, den Absorber in gewissen Zeitabständen, spätestens dann, wenn seine Aufnahmekapazität für das Öl bzw. die ölhaltige Flüssigkeit gesättigt bzw. erschöpft ist, zu entnehmen oder gegen einen aufnahmefähigen Absorber auszutauschen und den mit Öl angereicherten Absorber zu entsorgen.

Es eignen sich besonders solche Materialien, die ölaufnahmefähig, insbesondere saugfähig, sind, z. B. ein Fasermaterial wie Watte oder Vlies oder ein Granulat.

In den Unteransprüchen sind Merkmale enthalten, die eine einfache und flächengünstige Anordnung des Materials und/oder von Aufnahmekästen auch dann ermöglichen, wenn der Träger für das Fahrzeug durch Schienen gebildet ist, wobei dafür gesorgt ist, daß auch an den Schienen herunterfließendes Öl bzw. ölhaltige Flüssigkeit selbsttätig in den wenigstens einen Aufnahmeraum bzw. zum Absorber bzw. Material gelangt.

Eine andere vorteilhafte Weiterbildung bezieht sich darauf, zu vermeiden, daß das Öl bzw. die ölhaltige Flüssigkeit in die Zwischenräume zwischen den Aufnahmekästen gelangt.

Durch in Reihen angeordnete Aufnahmekästen und/oder Materialmatten läßt sich in einfacher Weise ein Auffangsystem großer Oberfläche realisieren, so daß sich der Stellplatz auch für große bzw. lange Fahrzeuge, z. B. Züge, eignet.

Die Erfindung ermöglicht auch eine einfache Ausgestaltung eines Aufnahmekastens, insbesondere hinsichtlich der Ausbildung von Tragschenkeln für eine Abdeckung, wobei eine kostengünstige Herstellung ermöglicht wird. Diese Ausgestaltung des Aufnahmekastens ist von eigenständiger erfinderischer Bedeutung, da die erzielbaren Vorteile auch für ein Material in vorbekannter Ausbildung und Anordnung gelten.

Nachfolgend werden vorteilhafte Ausgestaltungen eines Ausführungsbeispiels eines erfindungsgemäßen Auffangsystems und eines erfindungsgemäßen Verfahrens anhand einer Zeichnung näher erläutert. Es zeigen:
- Fig. 1: ein erfindungsgemäßes Auffangsystem im vertikalen Querschnitt;
- Fig. 2: einen Längsabschnitt des Auffangsystems nach Fig. 1 in der Draufsicht;
- Fig. 3: einen Aufnahmekasten in perspektivischer Draufsicht;
- Fig. 4: einen Absorber für das Auffangsystem in Form einer Matte als Einzelteil im vertikalen Schnitt;
- Fig. 5: der Absorber nach Fig. 4 in abgewandelter Ausgestaltung;
- Fig. 6: der Absorber in weiter abgewandelter Ausgestaltung;
- Fig. 7: der Absorber in weiter abgewandelter Ausgestaltung;
- Fig. 8: ein erfindungsgemäßen Auffangsystem im vertikalen Schnitt in abgewandelter Ausgestaltung ;
- Fig. 9: einen Längsabschnitt des Auffangsystems nach Fig. 8 in der Draufsicht und
- Fig. 10: einen Aufnahmekasten gemäß Fig. 3 in abgewandelter Ausgestaltung;
- Fig. 11: den Absorber in der Seitenansicht in weiter abgewandelter Ausgestaltung; und
- Fig. 12: den Absorber nach Fig. 11 in der Unteransicht.

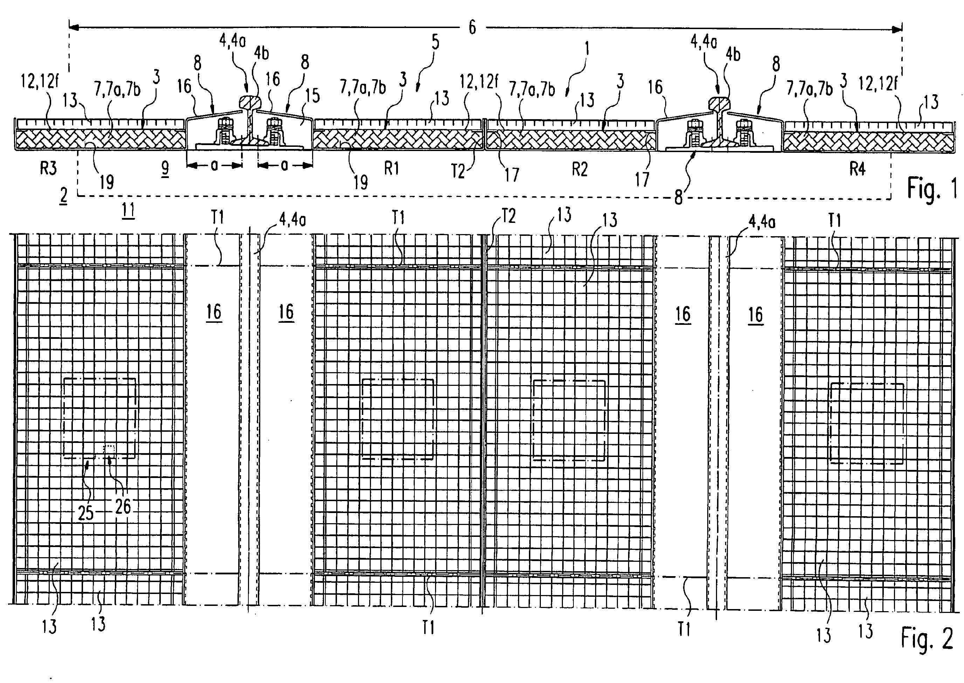

Die Hauptteile des in seiner Gesamtheit mit 1 bezeichneten Auffangsystems sind, wie in Fig. 1 und Fig. 2 gezeigt, eine tragende Basis 2, auf der sich wenigstens ein Aufnahmeraum 3 befindet, wenigstens ein Träger 4, der Teil eines Stellplatzes 5 für ein andeutungsweise dargestelltes Fahrzeug 6 ist, von dem Öl oder eine ölhaltige Flüssigkeit austreten kann, und ein Absorber 7, der sich im Aufnahmeraum 3 befindet und das Öl oder die ölhaltige Flüssigkeit absorbiert und Wasser abweist. Dabei ist der Auffangraum 3 so angeordnet, daß aus dem Fahrzeug 6 austretendes Öl und/oder abtropfendes Wasser zum Aufnahmeraum 3 vorzugsweise oberhalb des Absorbers 7 gelangt, um vom Absorber 7 absorbiert bzw. abgewiesen zu werden.

Die horizontale Größe des Aufnahmeraumes 3 kann so groß bemessen sein, daß vom Gegenstand 6 austretendes Öl aufgrund der Schwerkraft direkt in den Aufnahmeraum 3 und auf den Absorber 7 abfließt oder tropft. Dabei ist es von Vorteil, den Aufnahmeraum 3 größer auszubilden als die horizontale Abmessung des Fahrzeugs 6, um zu gewährleisten, daß das Öl nicht neben den Aufnahmeraum 3 gelangt. Der Aufnahmeraum 3 kann jedoch auch kleiner bemessen sein als das Fahrzeug 6, wenn durch Leitelemente dafür gesorgt ist, daß das in dem Bereich abströmende Öl und/oder Wasser, in dem sich der Aufnahmeraum 3 nicht befindet, durch Leitelemente abgefangen und zum Aufnahmeraum 3 und zum Absorber 7 geleitet wird bzw. werden.

Mit dem Auffangsystem 1 läßt sich somit vom Fahrzeug 6 austretendes Öl aufnehmen, und für eine Entsorgung vorübergehend deponierten bzw. bereithalten, so daß es nicht oder in wesentlich verringerter Menge in die Umwelt, hier in den Boden des Stellplatzes, gelangt.

Insbesondere dann, wenn der Stellplatz 5 nicht überdacht ist, bildet nicht nur das Öl sondern auch Spritzwasser oder Regenwasser bei einer Vermischung mit dem Öl oder der ölhaltigen Flüssigkeit einen zu entsorgenden Schadstoff, wobei das Wasser an der Oberfläche des Fahrzeugs 6 befindliches Öl durch einen Abspüleffekt mitnimmt und als Wasser oder Wasser/Öl-Gemisch zum Aufnahmeraum 3 vorzugsweise über den Absorber 7 gelangt.

Bei dem Fahrzeug handelt es sich insbesondere um ein schienengebundenes Fahrzeug, das eine Einrichtung aufweist, die Öl oder die ölhaltige Flüssigkeit enthält, z. B. eine Pumpeinrichtung, eine Umfülleinrichtung, eine Zapfstelle, einen Motor oder einen Behälter, so daß nicht auszuschließen ist, daß Lecköl oder fehlgeleitetes Öl austreten kann.

Beim Ausführungsbeispiel handelt es sich um ein Auffangsystem 1 für einen Fahrzeug-Stellplatz 5, insbesondere für schienengebundene Fahrzeuge, wobei der Stellplatz 5 wenigstens zwei einen üblichen Abstand voneinander aufweisende Schienen 4a aufweist, die durch jeweils einen Träger 4 gebildet sind. Die Schienen 4a sind durch übliche Befestigungsmittel 4b auf einer Schwelle 9 befestigt, die mit dem sie umgebenden Bodenmaterial 11 die Basis 2 bildet.

Im Rahmen der Erfindung kann der Aufnahmeraum 3 ein einziger Aufnahmeraum 3 sein, der durch einen Aufnahmekasten 12 begrenzt ist, der oberseitig eine flüssigkeitsundurchlässige Abdeckung 13 aufweist, die vorzugsweise begehbar ist und durch ein Rost gebildet ist.

Beim Ausführungsbeispiel besteht der Absorber 7 aus einer durchlässigen Schicht Material 7a, das das Öl oder die ölhaltige Flüssigkeit absorbiert und wenigstens an seiner Oberseite einen Überzug 8 aufweist, der das Öl oder die ölhaltige Flüssigkeit durchläßt und Wasser abweist. Der Überzug 8 ist mit kleinen Durchgangsöffnungen so porös oder perforiert, daß das Öl oder die ölhaltige Flüssigkeit durchdringt und vorzugsweise unter der Saugwirkung des Materials 7a eingesaugt wird, während das Wasser abgewiesen wird, sich auf dem Überzug 8 vorzugsweise weitläufig verteilt und seitlich wegrinnt. Der Überzug 8 ist vorzugsweise durch eine Folie gebildet, insbesondere aus Kunststoff. Als Material für die Kunststoffolie eignet sich Polypropylen (PP), vorzugsweise Spunbont-Polypropylen.

Bei dem Material 7a handelt es sich um ein Fasermaterial, das z. B. durch eine Watte oder ein Vlies, insbesondere aus Mikrofasern, oder durch ein Granulat gebildet sein kann. Bevorzugt handelt es sich um ein Mikrofaser-Material aus einem Polypropylen Meltblow Vliesstoff. Dieser hat bei 20°C bevorzugt ein Volumengewicht von 0,05 g/cm³ bis 0,1 g/cm³, besonders bevorzugt von etwa 0,075 g/cm³. Um die Handhabung des Materials 7a zu erleichtern, ist es vorteilhaft, das Material 7a in Form einer Matte 7b vorzufertigen, deren Länge, Breite und Höhe der Innengröße des Aufnahmeraums 3 einem Aufnahmekasten 12 entsprechen kann oder etwas kleiner sein kann. Dabei sollte die Matte 7b von einer solchen Formfestigkeit sein, daß sie gelagert, zugeführt und in den Aufnahmeraum 3 eingesetzt werden kann, ohne ihre Form zu verlieren, so daß sie beim Einsetzen paßt. Die Überzug 8 ermöglicht es dann mit dem Material 7a die Matte 7b zu bilden, wenn das Material 7a zusammenhängend ist, wenn auch locker, und der Überzug 8 wenigstens stellenweise mit dem Material 7a verbunden ist, wobei die Verbindungsstellen 8a auf den Umfang oder auf der Fläche verteilt sein sollten, um einen guten Zusammenhalt zu gewährleisten. Der Überzug 8 kann jedoch auch linienförmig, z. B. durch Steppen, oder flächig mit dem Material 7 verbunden sein, z. B. durch Kleben.

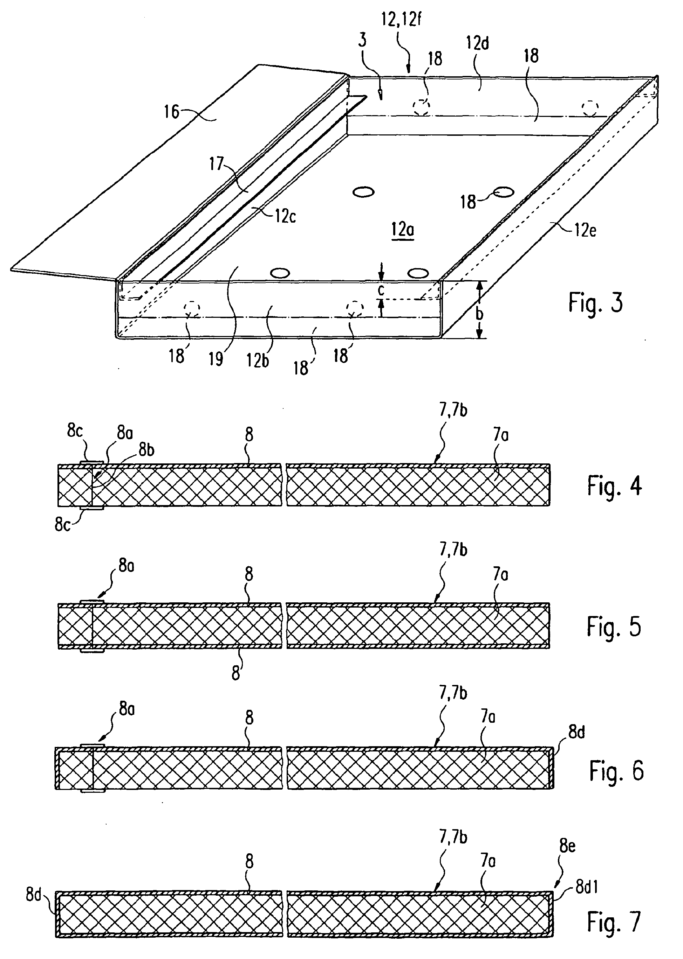

Die Figuren 4 bis 6 zeigen jeweils beispielhaft nur eine von mehreren Verbindungen des Überzugs 8 mit dem Material 7a an mehreren, im Randbereich und/oder auf dem Umfang verteilt angeordneten Verbindungsstellen 8. Die Verbindung wird durch ein den Überzug 8 und das Material 7a quer durchfassendes, z. B. durchstochenes, Band 8b gebildet, deren Enden mit an dem Breitseiten angeordneten vorzugsweise flachen Knöpfen 8c verbunden ist.

Fig. 5 zeigt eine Materialanordnung, bei der ein Überzug 8 oberseitig und unterseitig des Materials angeordnet ist und lose oder mit dem Material 7 verbunden sein kann. Gemäß Fig. 6 ist der Überzug 8 mit vier Seitenteilen 8d, deren Höhe an die Mattendicke angepaßt ist, im Sinne einer an die Form und Größe des Materials 7a angepaßten Kappe ausgebildet, so daß er das Material 7a mit Ausnahme dessen Unterseite allseitig umgibt. Die vertikalen Ränder der Seitenteile 8d sind miteinander verbunden, z. B. verschweißt oder verklebt.

Beim Ausführungsbeispiel nach Fig. 7 ist der Überzug 8 sack- bzw. kissenförmig mit allseitigen Seitenteilen an die Form und Größe des Materials 7 angepaßt, wobei er als Vorfertigungsprodukt eine schmalseitige Öffnung 8e aufweisen kann, die durch ein Seitenteil 8d verschließbar ist. Das Seitenteil 8d1 kann an nur einem, vorzugsweise breitseitigen Rand mit dem übrigen Überzug 8 verbunden sein und die Öffnung 8e überlappen, wodurch die Abdeckung des darin befindlichen Materials 7 verbessert wird.

Das Material 7a kann z. B. als lose Watte oder als Vlies in Form einer vorgefertigten Vliesmatte 7b ggf. mit dem Überzug 8 direkt in den Aufnahmeraum 3 oder in den sackförmigen Überzug 8 eingefüllt werden, dessen Form und Größe der Form und Größe des Aufnahmeraums 3 entspricht, so daß die so gebildete Matte 7b oder ein entsprechendes Kissen passend einsetzbar ist. Insbesondere bei einer großen Abmessung des Aufnahmeraums 3 ist es im Rahmen der Erfindung auch möglich und vorteilhaft, die Abmessungen der Matte 7b geringer als die Abmessungen des Aufnahmeraums 3 zu bestimmen, vorzugsweise um einen solchen Teil geringer zu bestimmen, daß zwei oder mehrere Matten bzw. Kissen, neben- und/oder übereinander in den Aufnahmeraum 3 einsetzbar sind und diesen z. B.ausfüllen.

Das Fasermaterial 7a besteht vorzugsweise aus Kunststoff, insbesondere Polypropylen (PP). Aus dem gleichen Material kann auch der Überzug 8 bestehen, z. B. in Form eines durchlässigen Gewebes oder einer perforierten Folie. Zur Realisierung eines Brandschutzes ist es vorteilhaft, das Material 7a und/oder den Überzug 8 mit einer Brandschutzimprägnierung zu versehen, um die Entflammbarkeit auszuschließen oder zu vermindern.

Das Material 7a und/oder der Überzug 8 ist bzw. sind somit für Öl oder eine ölhaltige Flüssigkeit durchlässig und dabei öleophyl und hydrophob. Es ist somit geeignet, das auf oder an den Überzug 8 oder auf oder an das Material 7a gelangte Öl oder die ölhaltige Flüssigkeit durchzulassen, so daß es bzw. sie einsickern oder eingesaugt werden kann. Da das Wasser vom Material 7a und/oder vom Überzug 8 abgewiesen wird, findet somit selbsttätig eine Trennung des Öles bzw. der ölhaltigen Flüssigkeit vom Wasser statt.

Beim Ausführungsbeispiel ist zu beiden Seiten der Schienen 4a und dazwischen jeweils das Material 7a ggf. mit Überzug 8 in Aufnahmeräumen 3 angeordnet, die durch Aufnahmekästen 12 begrenzt sein können. Die vorzugsweise aus Metall, insbesondere aus Stahl, bestehenden Aufnahmekästen 12 sind auf der bzw. den Schwellen 9 und/oder dem Bodenmaterial 11 angeordnet und können in einem seitlichen Abstand a von den Schienen 4a angeordnet sein, wodurch ein Freiraum 15 für die Befestigungsmittel 8 geschaffen ist. Die Höhe b der Aufnahmekästen 12 ist vorzugsweise geringer als der Abstand des Schienenkopfes 4b von der Schwelle 9. Dies ermöglicht es, den Freiraum 15 abdeckende Leitwände 16 so anzuordnen, daß sie sich von einer den zugehörigen Schienenkopf 4b mit ihrem freien Rand untergreifenden Position abwärts geneigt zum oberen Rand des Auffangkastens 12 erstrecken, so daß auf die Schienenköpfe 4b und auf die Leitwände 16 gelangtes Öl und/oder Wasser zum Aufnahmeraum 3 hin geleitet wird und der Freiraum 15 vor Schadstoffen geschützt wird.

Wie sich insbesondere aus Fig. 3 entnehmen läßt, kann jeweils die Leitwand 16 mit geringer Steigung, z. B. etwa 6°, am oberen Rand des zugehörigen Aufnahmekastens 12 befestigt sein, z.B. durch Schweißen. Hierdurch ist die Leitwand 16 hinreichend stabil befestigt, so daß es einer Befestigung an der Schiene 4a nicht bedarf. Wie außerdem insbesondere aus Fig. 3 zu entnehmen ist, besteht ein Aufnahmekasten 12 aus einer viereckigen Bodenwand 12a und sich von deren Rändern nach oben erstreckenden vier Seitenwänden 12b, 12c, 12d, 12e. Zur Lagerung der vorzugsweise durch einen Gitterrost gebildeten Abdeckung 13 sind z. B. an zwei einander gegenüberliegenden Seitenwänden 12c, 12e Tragelemente 17 in einem Abstand c vom oberen Rand befestigt, der der Höhe der Abdeckung 13 entspricht. Die Form und Abmessungen der Abdeckung 13 sind mit Bewegungsspiel an die horizontalen Innenabmessungen des Aufnahmekastens 12 angepaßt, so daß die Abdeckung 13 in den Aufnahmekasten 12 paßt und mit dessen oberen Rand vorzugsweise abschließen kann. Beim Ausführungsbeispiel befinden sich die Tragelemente 17 an den sich parallel zu den Schienen 4a erstreckenden Seitenwänden 12c, 12e und sie können durch sich im wesentlichen über die gesamte Seitenwand erstreckende Profile, insbesondere Winkelprofile, gebildet sein.

Im unteren Bereich des Aufnahmekastens 12 ist eine oder sind mehrere Ausflußöffnungen 18 angeordnet, die z.B. in der Bodenwand 12a oder am unteren Rand einer oder mehrerer Seitenwände angeordnet sein können.

Fig. 3 zeigt strichpunktiert Auslaßöffnungen 18 am unteren Rand einer oder mehrerer Seitenwände, die sich über deren gesamte Länge erstrecken und dadurch gebildet sein können, daß die betreffende Seitenwand 12b, 12d schmaler bemessen ist und einen entsprechenden Abstand von der Bodenwand 12a aufweist. Diese Ausgestaltung ist material- und aufwandsparend, weil die wenigstens eine Auslaßöffnung 18 durch Weglassung von Material gebildet wird und deshalb keine Öffnung ausgebildet und kein Material abgearbeitet werden muß.

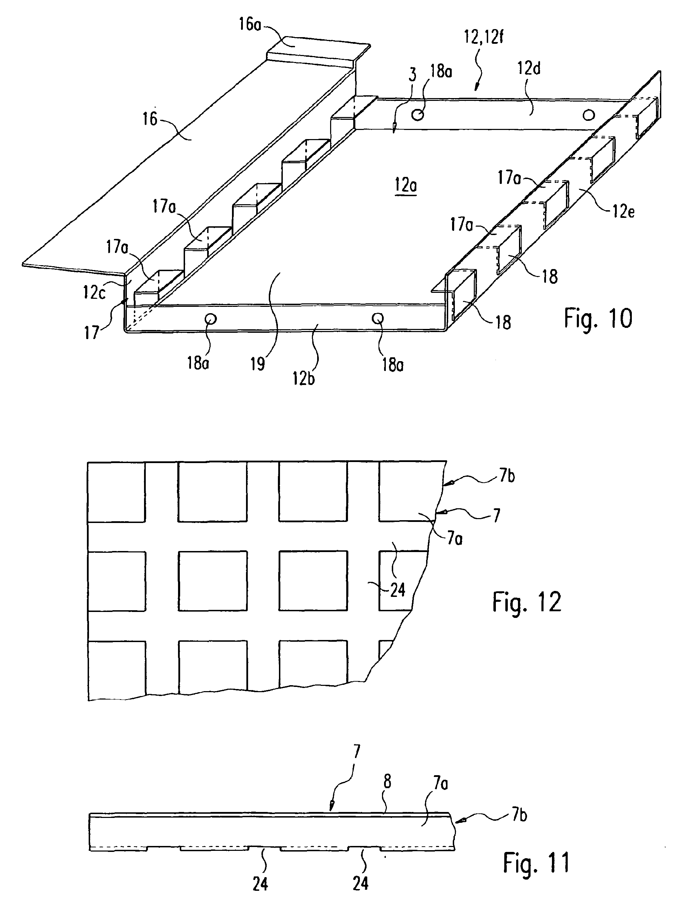

Beim Ausführungsbeispiel nach Fig. 10, bei dem gleiche oder vergleichbare Teile mit gleichen Bezugszeichen versehen sind, sind die Tragelemente 17 einteilig an der jeweils zugehörigen Seitenwand 12c, 12e ausgebildet.

Vorzugsweise in Form einer von der Seitenwand etwa horizontal nach innen abstehenden Zunge 17a, die durch einen U-förmigen Einschnitt 17b in der Seitenwand gebildet und nach innen hochgebogen worden ist. Der die jeweils zugehörige Öffnung 18 bildende Einschnitt 17b erstreckt sich vorzugsweise bis zur Bodenwand 12a, wodurch das im Aufnahmekasten 12 befindliche Wasser stufenlos aus der zugehörigen Ausgleichsöffnung 18 ausfließen kann. Insbesondere aus Stabilitätsgründen sind eine Mehrzahl ausgeschnittener und hochgebogener Zungen 17a vorgesehen, wodurch sich auch eine Mehrzahl Auslaßöffnungen 18 ergeben. Wie Fig. 10 außerdem entnehmen läßt, befinden sich die Zungen 17b vorzugsweise an den sich parallel zu den Schienen 4a erstreckenden Seitenwänden 12c, 12e.

Unter der Abdeckung 13 und hier unter den Tragelementen 17 ist im Aufnahmekasten 12 ein den Aufnahmeraum 3 bildender Freiraum 19 vorhanden, in dem das Material 7a von oben eingebracht ist. Das Einbringen unter die Tragelemente 17 ist möglich und zwar auch dann, wenn das Material 7a in Form einer Matte 17b oder eines Kissens vorliegt, weil die Matte 7b oder das Kissen geringfügig verformt werden kann, um es unter die Tragelemente 17 einzusetzen.

Da ein vorliegender Stellplatz 5 beträchtliche Breitenund Längenabmessungen aufweisen kann, ist es vorteilhaft, wenigstens einen zugehörigen Aufnahmekasten 12 baukastenmäßig durch mehrere, insbesondere gleich große und vorzugsweise identische Aufnahmekastenteile 12f zu bilden, die als kleine Bauteile einfacher hergestellt, transportiert und montiert werden können. Beim Ausführungsbeispiel sind die Aufnahmekastenteile 12f zwischen den Schienen 4a in zwei sich längs dazu erstreckenden Reihen R1, R2 und an den Außenseiten der Schienen 4a jeweils in einer Reihe R3, R4 angeordnet, wobei alle Aufnahmekastenteile 12f identisch ausgebildet sind, jedoch jeweils so verdreht zueinander angeordnet sind, daß die Leitwände 16 sich jeweils zur zugehörigen Schiene 4a erstrecken. Die Aufnahmekastenteile 12f liegen somit an sich quer zu den Reihen erstreckenden Teilungsfugen T1 aneinander, wobei zwischen den Schienen 4a die in den Reihen R1 und R2 angeordneten Auffangkastenteile 12f an einer sich längs erstreckenden Teilungsfuge T2 aneinander anliegen. Um zu vermeiden, daß Öl oder ölhaltiges Wasser zwischen den Aufnahmekastenteilen 12f in den Boden gelangt, können die Teilungsfugen T1, T2 abgedichtet oder abgedeckt sein, z. B. durch sie überdeckende Abdeckteile.

Die Aufteilung des Aufnahmeraums 3 bzw. Aufnahmekastens 12 in mehrere Längsabschnitte vereinfacht die Herstellung längerer Stellplätze 5, z. B. für mehrere Waggons.

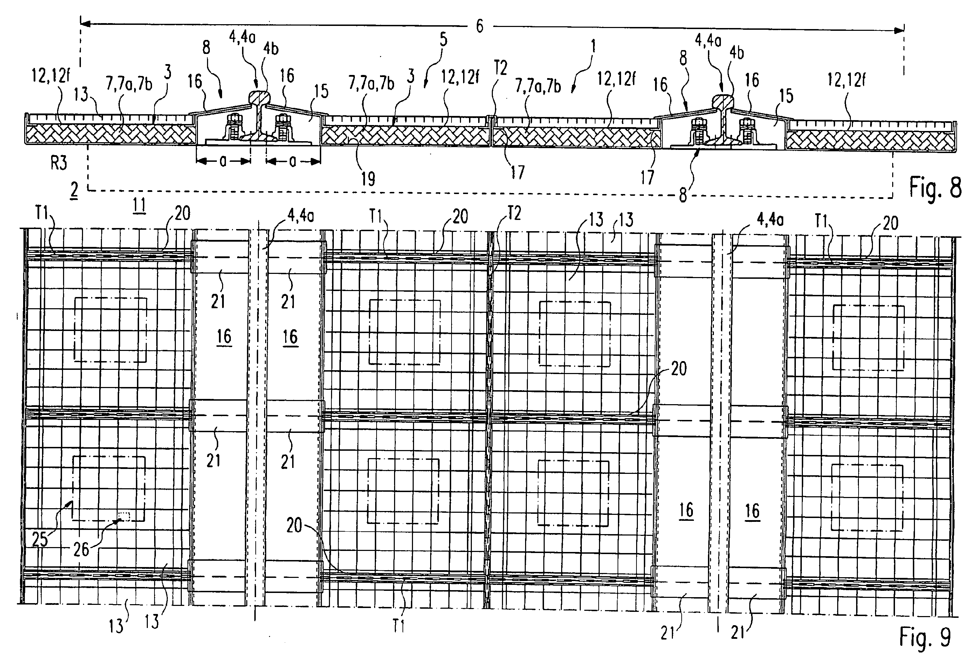

Beim Ausführungsbeispiel nach Fig. 8 und 9, bei dem gleiche oder vergleichbare Teile mit gleichen Bezugszeichen versehen sind, und bei dem außerdem Aufnahmekastenteile 12f in gleicher Ausbildung und Anordnung vorgesehen sind, sind zur Abdeckung der Teilungsfugen T1, T2 U-Schienen 20 vorgesehen, die jeweils auf die an den Teilungsfugen T1, T2 nebeneinanderliegenden Seitenwände aufgesteckt sind, wobei ihre Schenkel die Seitenwände übergreifen. Diese U-Schienen 20 decken nicht nur die Teilungsfugen T1, T2 ab, sondern sie arretieren auch die Auffangkastenteile 12f aneinander, wodurch die gesamte Auffangkastenanordnung stabilisiert wird. Es können zwei unterschiedliche U-Schienen 20 vorgesehen sein, nämlich solche, die sich über einen Kreuzungspunkt der Teilungsfugen T1, T2 hinaus erstrecken und in ihren Schenkeln Schlitze zur Aufnahme der sich quer dazu erstreckenden Seitenwände aufweisen und solche, deren Länge so groß ist, daß sie zwischen zwei sich über die Kreuzungspunkte hinaus erstreckende U-Schienen 20 passen.

Zur Abdeckung der querverlaufenden Teilungsfugen T1 im Bereich der aneinanderstoßenden Leitwände 16 können Abdeckplatten 21 vorgesehen sein, die auf den Leitwänden 16 aufliegen und sich vom oberen Rand des zugehörigen Aufnahmekastenteils 12f bis zum Schienenkopf 4b oder darunter erstrecken. Dabei ist es möglich und vorteilhaft, jeweils an einem Stirnende der Leitwände 16 die Abdeckplatte 21 am zugehörigen Aufnahmekastenteil 12f zu befestigen, z. B. zu verschweißen, wodurch sie unverlierbar gehalten ist und die Handhabung sowie Montage vereinfacht ist. Auch bei dieser Ausgestaltung können die Auffangkastenteile 12f identisch ausgebildet sein.

Beim Ausführungsbeispiel nach Fig. 10 sind die quer angeordneten Seitenwände 12b, 12d um das Dickenmaß der Matte 7b oder etwas mehr niedriger ausgebildet als das Höhenmaß der Tragelemente 17. Hierdurch ist es möglich, die Matte 12b so zu verlegen, daß die quer verlaufenden Teilungsfugen T1 überlappen und abdecken.

Die jeweils einander benachbarten Aufnahmekastenteile 12f können horizontal miteinander verschraubt sein. Hierzu können in den quer angeordneten Seitenwänden 12b, 12d Schraublöcher 18a vorgesehen sein, wie es Fig. 10 beispielhaft zeigt.

Beim Ausführungsbeispiel nach Fig. 10 ist außerdem die Abdeckplatte 21 einteilig an die zugehörige Leitwand 16 angeformt und vorzugsweise durch ein paralleles Abköpfen der Leitwand 16 gebildet, die mit einem ihre Stirnseite überragenden Leitwandabschnitt 16a vorgefertigt ist, der vorzugsweise nach oben abgeköpft ist. Sowohl dann, wenn die Abdeckplatte 21 im vorbeschriebenen Sinne aufgesetzt ist, z. B. aufgeschweißt ist (Fig. 9), als auch dann, wenn sie gemäß Fig. 10 abgeköpft ist, ist es vorteilhaft, die Aufnahmekästen 12 nicht identisch sondern zwei Arten von Aufnahmekastenteilen 12f vorzufertigen, die im Bereich der Abdeckplatte 21 bezüglich einer die zugehörigen Schiene 4a enthaltende Vertikalebene oder einer die einander zugewandten oberen Ränder der Leitwände 16 enthaltenden Vertikalebene spiegelbildlich ausgebildet sind. Hierdurch können die beidseitig von den Schienen 4a gelegenen Aufnahmekastenteile 12f in einer gewünschten Längsrichtung fortlaufend montiert und die Teilungsfugen T1 im Bereich der Leitwände 16 abgedeckt werden. Sind dagegen nur identische Aufnahmekastenteile 12f vorhanden, dann müssen die Aufnahmekästen 12 von beiden Längsenden der Aufnahmekastenanordnung montiert werden.

Das Auffangsystem 1 bzw. ein Verfahren zum Vermeiden einer Bodenverschmutzung im Bereich des Stellplatzes 5 funktioniert wie folgt. Wenn Öl oder eine ölhaltige Flüssigkeit vom Fahrzeug 6 austritt, gelangt es z. B. durch Abtropfen direkt oder mittelbar über die Leitwände 16 in die Aufnahmekästen 12 oder auf das Material 7a. Dies gilt auch für Wasser, z. B. Spritz- oder Regenwasser, das mit dem Öl oder der ölhaltigen Flüssigkeit vermischt oder pur auf das Material 7a gelangt. Aufgrund der Öldurchlässigkeit des Materials 7a und/oder des Überzugs 8 durchringt das Öl oder die ölhaltige Flüssigkeit den Überzug 8 und dringt auch in das Material 7a ein, wo es absorbiert und gesammelt wird. Das Wasser wird dagegen vom Überzug 8 abgewiesen, wodurch selbsttätig die Trennung erfolgt, und es kann sich auf der Oberseite verteilen und über die oberen Ränder an den Seitenflächen des Materials 7a oder des Überzugs 8 abfließen. In den Bereichen, in denen sich kein Überzug 8 am Material 7a befindet, siehe Fig. 4 bis 6, kann das Wasser vom Material 7a in entsprechender Weise abgewiesen werden. Die vorbeschriebene Funktion findet auch an der Unterseite des Materials statt, wenn das Öl oder die ölhaltige Flüssigkeit oder das Wasser dahin gelangt. Letzteres wird durch einen Abstand voneinander aufweisende Furchen 24 in der Unterseite des Materials 7a oder auch im Überzug 8 ermöglicht. Die Furchen 24 münden vorzugsweise an den Seitenwänden aus und können sich in einer Richtung oder quer zueinander erstrecken und kreuzen, wie es Fig. 11 und 12 zeigen. Das Material 7a ist wenigstens im Bereich der Furchen 24 formstabil, so daß es auch unter dem Ölgewicht nicht zusammensackt und die Furchen 24 verschließt.

Aufgrund dieser Trennung, die zugleich eine Reinigung des Wassers ist, kann das Wasser ohne eine besondere Entsorgung in den vorhandenen Boden abgelassen werden. Aufgrund dieser Ölabscheidung im Aufnahmeraum 3 kann eine gemeinsame Abführung der Flüssigkeiten und spätere Trennung in einem Ölabscheidesystem entfallen. Es können somit auch besondere Abführungsleitungen und eine besondere Entsorgung oder Weiterbehandlung des Wassers entfallen.

Das Material 7a ist im Rahmen seiner Ö1-Aufnahmekapazität funktionsfähig. Beim vorliegenden Ausführungsbeispiel kann das Material 7a z. B. bis zu 10,5 kg Öl pro 1 kg Materialgewicht aufnehmen. Wenn die Aufnahmekapazität erschöpft ist, wird das Material 7a aus dem oder den Aufnahmeräumen 3 entfernt und durch neues Material 7a ausgetauscht und entsorgt.

Zwecks Verbesserung einer umweltgerechten Entsorgung des Materials 7a und des Überzugs 8 bzw. der Matten 7b ist es vorteilhaft, eine in Fig. 2 und 9 angedeutete Tasche 25 aus einem dünnen faltbaren und wasserundurchlässigen Material, insbesondere einer Folie, im Aufnahmeraum 3 zu deponieren, wobei das Volumen der Tasche 25 so groß ist, daß das Material wenigstens eines Aufnahmeraums 3 in die Tasche einsteckbar ist. Da es sich bei dem ölhaltigen Material hinsichtlich seiner Entsorgung um ein Problemmaterial handelt, ist im weiteren vorteilhaft, die Tasche mit einer Markierung 26 zu versehen, die sie als eine Entsorgungstasche für einen Problemstoff kennzeichnet. Hierzu kann die Tasche 25 gefärbt sein, z. B. rot, oder einen den Problemstoff kennzeichnenden Aufdruck aufweisen. Wenn das Volumen der Tasche 25 an die Materialmenge eines Aufnahmeraums 3 angepaßt ist, ist jeweils eine Tasche 25 in die Aufnahmeräume 3 zu deponieren, z. B. auf oder unter dem Material 7a oder der Matte 7b. Wenn dagegen das Volumen der Tasche 25 so groß ist, daß die Materialmenge mehrerer Aufnahmeräume 3 hineinpaßt, braucht eine Tasche 25 lediglich in einer entsprechend verringerten Anzahl der Aufnahmeräume 3 deponiert zu werden.

## Patentansprüche

1. Auffangsystem (1) für einen Fahrzeug-Stellplatz (5), insbesondere für schienengebundene Fahrzeuge, mit wenigstens einem Aufnahmeraum (3), indem ein wasserabweisender Absorber (7) angeordnet ist, der ein Material (7a) aufweist, das Öl oder eine ölhaltige Flüssigkeit absorbiert, wobei der Absorber (7) Wasser abweist,
**dadurch gekennzeichnet,**
**daß** der Absorber (7) aus einer Schicht Material (7a) besteht, das Öl oder die ölhaltige Flüssigkeit absorbiert, und an seiner Oberseite oder auch an seinen Seitenflächen und/oder auch an seiner Unterseite einen Überzug (8) aufweist, der Öl oder die ölhaltige Flüssigkeit durchläßt und Wasser abweist.

2. Auffangsystem nach Anspruch 1,
**dadurch gekennzeichnet,**
**daß** der Absorber (7) oder der Überzug (8) oder auch das Material (7a) öleophyl und hydrophob ist bzw. sind.

3. Auffangsystem nach einem der Ansprüche 1 bis 2,
**dadurch gekennzeichnet,**
**daß** das Material (7a) ein Fasermaterial, z. B. Watte oder Vlies, oder ein Granulat ist.

4. Auffangsystem nach Anspruch 3,
**dadurch gekennzeichnet,**
**daß** das Fasermaterial Mikrofasern aufweist.

5. Auffangsystem nach Anspruch 4,
**dadurch gekennzeichnet,**
**daß** die Mikrofasern als wesentlichen Bestandteil Polypropylen mit einem Volumengewicht von 0,05 bis 0,1 g/cm³, vorzugsweise etwa 0,075 g/cm³, aufweisen.

6. Auffangsystem nach Anspruch 1 oder 3,
**dadurch gekennzeichnet,**
**daß** der Überzug (8) oder auch das Fasermaterial oder das Granulat mit einer Brandschutzimprägnierung versehen ist bzw. sind.

7. Auffangsystem nach Anspruch 1 oder 6,
**dadurch gekennzeichnet,**
**daß** der Überzug (8) wenigstens stellenweise mit dem Material (7a) verbunden ist und eine Matte (7b) bildet, insbesondere als Matte (7b) vorgefertigt ist.

8. Auffangsystem nach einem der vorhergehenden Ansprüche 1 oder 6,
**dadurch gekennzeichnet,**
**daß** der Überzug (8) das Material (7a) allseitig umgibt und insbesondere mit dem Material (7a) als Kissen vorgefertigt ist.

9. Auffangsystem nach einem der vorhergehenden Ansprüche,
**dadurch gekennzeichnet,**
**daß** der Absorber (7) durch eine starre flüssigkeitsdurchlässige Abdeckung (13), vorzugsweise ein Rost, abgedeckt ist, die begehbar ist.

10. Auffangsystem nach einem der vorhergehenden Ansprüche,
**dadurch gekennzeichnet,**
**daß** der Aufnahmeraum (3) in einem Aufnahmekasten (12) angeordnet ist, der in seinem unteren Bodenbereich wenigstens eine Auslaßöffnung (18) und oben eine Abdeckung (13) aufweist.

11. Auffangsystem nach Anspruch 10,
**dadurch gekennzeichnet,**
**daß** die Abdeckung (13) auf den Seitenwänden des Aufnahmekastens (12) oder auf innen an den Kastenseitenwänden angeordneten Tragelementen (17) aufliegt.

12. Auffangsystem nach Anspruch 11,
**dadurch gekennzeichnet,**
**daß** die Tragelemente (17) mit den Seitenwänden einteilig ausgebildet sind und vorzugsweise durch Zungen (17a) gebildet sind, die durch einen U-förmigen Einschnitt (17b) in die Seitenwand gebildet und hochgebogen sind, wobei vorzugsweise der Einschnitt (17b) sich bis zur Bodenwand (12a) des Aufnahmekastens (12) erstreckt.

13. Auffangsystem nach einem der Ansprüche 10 bis 12,
**dadurch gekennzeichnet,**
**daß** zwei einen Abstand voneinander aufweisende Schienen (4a) für das Fahrzeug vorgesehen sind und Aufnahmeräume (3) mit darin angeordneten Absorbern (7) zwischen und außenseitig von den Schienen (4a) jeweils vorzugsweise in einem Aufnahmekasten (12) angeordnet sind.

14. Auffangsystem nach Anspruch 13,
**dadurch gekennzeichnet,**
**daß** die Aufnahmekästen (12) in einem Abstand (a) von den Schienen (4a) angeordnet sind und jeweils Leitwände (16) vorgesehen sind, die sich jeweils vom oberen Rand der Aufnahmekästen (12) ansteigend zur zugehörigen Schiene (4a) erstrecken, vorzugsweise deren Schienenkopf (4b) untergreifen.

15. Auffangsystem nach einem der Ansprüche 10 bis 14,
**dadurch gekennzeichnet,**
**daß** der Aufnahmekasten (12) bzw. die Aufnahmekästen (12) aus mehreren Auffangkastenteilen (12f) baukastenförmig zusammengesetzt ist bzw. sind.

16. Auffangsystem nach Anspruch 15,
**dadurch gekennzeichnet,**
**daß** die Aufnahmekastenteile (12f) zwischen den Schienen (4a) in wenigstens zwei Längsreihen (R1, R2) und außen von den Schienen (4a) in jeweils wenigstens einer Längsreihe (R3, R4) angeordnet sind.

17. Auffangsystem nach Anspruch 15 oder 16,
**dadurch gekennzeichnet,**
**daß** die Auffangkastenteile (12f) identisch ausgebildet sind oder die zu beiden Seiten der Schienen (4a) angeordneten Aufnahmekästen (12) bezüglich einer vertikalen Längsmittelebene der zugehörigen Schiene (4a) spiegelsymmetrisch ausgebildet sind.

18. Auffangsystem nach einem der Ansprüche 15 bis 17,
**dadurch gekennzeichnet,**
**daß** die Aufnahmekastenteile (12f) bezüglich einer vertikalen Mittelebene um 180° verdreht zueinander angeordnet sind.

19. Auffangsystem nach einem der Ansprüche 15 bis 18,
**dadurch gekennzeichnet,**
**daß** die zwischen den Aufnahmekastenteilen (12f) angeordneten Teilungsfugen (Tl, T2) abgedichtet oder durch Abdeckteile (16, 20) abgedeckt sind.

20. Auffangsystem nach Anspruch 19,
**dadurch gekennzeichnet,**
**daß** die Abdeckteile (20) im Bereich der nebeneinander angeordneten Seitenwände der Aufnahmekastenteile (12f) durch U-Schienen gebildet sind, die auf die Seitenwände aufgesteckt sind.

21. Auffangsystem nach Anspruch 17 oder 18,
**dadurch gekennzeichnet,**
**daß** die Teilungsfugen (T1) zwischen den Leitwänden (16) durch Abdeckplatten (21) abgedeckt sind.

22. Auffangsystem nach Anspruch 21,
**dadurch gekennzeichnet,**
**daß** die Abdeckplatten (21) jeweils an einem der beiden benachbarten Aufnahmekästen (12) befestigt, insbesondere angeschweißt, sind oder von einem der beiden Leitwände (16) abgeköpft sind.

23. Auffangsystem nach einem der vorhergehenden Ansprüche,
**dadurch gekennzeichnet,**
**daß** in der Unterseite und/oder in den Seitenflächen des Absorbers (7) oder des Materials (7a) oder der Matte (7b) oder auch im Überzug (8) in einer Richtung oder kreuzweise verlaufende Furchen (24) angeordnet sind, die jeweils randseitig auslaufen.

24. Verfahren zum Vermeiden einer Bodenverschmutzung durch ein von einem Fahrzeug ausgehendes Öl oder eine vom Fahrzeug ausgehende ölhaltige Flüssigkeit im Bereich eines Fahrzeug-Stellplatzes (5), insbesondere für schienengebundene Fahrzeuge, bei dem im Bereich des Stellplatzes (5) anfallendes Wasser und das Öl oder die ölhaltige Flüssigkeit in einem Aufnahmeraum (3) eines im Bereich des Stellplatzes (5) angeordneten Auffangsystems (1) aufgenommen werden und entsorgt werden,
wobei im Aufnahmeraum (3) das Öl oder die ölhaltige Flüssigkeit vom Wasser getrennt und gesammelt wird und das Wasser weitergeleitet wird,
**dadurch gekennzeichnet,**
**daß** das Wasser und das Öl oder die ölhaltige Flüssigkeit mit einem im Aufnahmeraum (3) angeordneten Absorber (7) kontaktiert und das Öl oder die ölhaltige Flüssigkeit vom Absorber (7) absorbiert wird und das Wasser vom Absorber (7) abgewiesen wird.

25. Verfahren nach Anspruch 24,
**dadurch gekennzeichnet,**
**daß** das Wasser in den Boden abgelassen wird.

26. Verfahren nach Anspruch 24 oder 25,
**dadurch gekennzeichnet,**
**daß** das Öl oder die ölhaltige Flüssigkeit oder der Absorber (7) mit dem absorbierten Öl oder der absorbierten Flüssigkeit in bestimmten Zeitabständen entnommen oder ausgetauscht und entsorgt wird bzw. werden.

## Claims

1. Catching system (1) for a vehicle parking place (5), in particular for railborne vehicles, having at least one receiving space (3), in which is arranged a water-repellent absorber (7) comprising a material (7a) which absorbs oil or an oil-containing liquid, the absorber (7) repelling water,
**characterised**
**in that** the absorber (7) comprises a layer of material (7a) which absorbs oil or the oil-containing liquid, and at its upper surface or also at its lateral surfaces and/or also at its lower surface has a coating (8) which lets oil or the oil-containing liquid through and repels water.

2. Catching system according to Claim 1,
**characterised**
**in that** the absorber (7) or the coating (8) or also the material (7a) is or are oleophilic and hydrophobic.

3. Catching system according to one of Claims 1 to 2,
**characterised**
**in that** the material (7a) is a fibrous material, e.g. cotton wool or nonwoven, or a granular material.

4. Catching system according to Claim 3,
**characterised**
**in that** the fibrous material comprises microfibres.

5. Catching system according to Claim 4,
**characterised**
**in that** the microfibres comprise, as an essential constituent, polypropylene having a weight by volume of 0.05 to 0.1 g/cm³, preferably about 0.075 g/cm³.

6. Catching system according to Claim 1 or 3,
**characterised**
**in that** the coating (8) or also the fibrous material or the granular material is or are provided with a fireproofing impregnation.

7. Catching system according to Claim 1 or 6,
**characterised**
**in that** the coating (8) is connected, at least in places, to the material (7a) and forms a mat (7b), in particular is prefabricated as a mat (7b).

8. Catching system according to one of the preceding Claims 1 or 6,
**characterised**
**in that** the coating (8) surrounds the material (7a) on all sides and in particular is prefabricated with the material (7a) as a cushion.

9. Catching system according to one of the preceding claims,
**characterised**
**in that** the absorber (7) is covered by a rigid liquid-permeable covering (13), preferably a grid, on which it is possible to walk.

10. Catching system according to one of the preceding claims,
**characterised**
**in that** the receiving space (3) is arranged in a receiving box (12) having at least one outlet opening (18) in its lower bottom region and a covering (13) at the top.

11. Catching system according to Claim 10,
**characterised**
**in that** the covering (13) rests on the side walls of the receiving box (12) or on supporting elements (17) arranged internally on the box side walls.

12. Catching system according to Claim 11,
**characterised**
**in that** the supporting elements (17) are formed in one piece with the side walls and are preferably formed by tongues (17a) which are formed by a U-shaped incision (17b) in the side wall and bent up, the incision (17b) preferably extending as far as the bottom wall (12a) of the receiving box (12).

13. Catching system according to one of Claims 10 to 12,
**characterised**
**in that** two rails (4a) which are at a distance from one another are provided for the vehicle, and receiving spaces (3) with absorbers (7) arranged therein are arranged between and outside the rails (4a) in each case preferably in a receiving box (12).

14. Catching system according to Claim 13,
**characterised**
**in that** the receiving boxes (12) are arranged at a distance
(a) from the rails (4a) and in each case guiding walls (16) are provided, which extend in each case from the upper edge of the receiving boxes (12) in an ascending manner to the associated rail (4a), and preferably reach under the rail head (4b) of the latter.

15. Catching system according to one of Claims 10 to 14,
**characterised**
**in that** the receiving box (12) or the receiving boxes (12) is or are composed of a plurality of catching box parts (12f) in modular fashion.

16. Catching system according to Claim 15,
**characterised**
**in that** the receiving box parts (12f) are arranged between the rails (4a) in at least two longitudinal rows (R1, R2) and outside the rails (4a) in at least one longitudinal row (R3, R4) in each case.

17. Catching system according to Claim 15 or 16,
**characterised**
**in that** the catching box parts (12f) are identically designed or the receiving boxes (12) arranged on both sides of the rails (4a) are mirror-symmetrically designed with respect to a vertical longitudinal centre plane of the associated rail (4a).

18. Catching system according to one of Claims 15 to 17,
**characterised**
**in that** the receiving box parts (12f) are arranged in a manner rotated by 180° relative to one another with respect to a vertical centre plane.

19. Catching system according to one of Claims 15 to 18,
**characterised**
**in that** the joints (Tl, T2) arranged between the receiving box parts (12f) are sealed off, or are covered by covering parts (16, 20).

20. Catching system according to Claim 19,
**characterised**
**in that** the covering parts (20) are formed, in the region of those side walls of the receiving box parts (12f) arranged next to one another, by U-rails which are fitted onto the side walls.

21. Catching system according to Claim 17 or 18,
**characterised**
**in that** the joints (T1) between the guiding walls (16) are covered by covering plates (21).

22. Catching system according to Claim 21,
**characterised**
**in that** the covering plates (21) are in each case fastened, in particular welded, to one of the two adjacent receiving boxes (12) or are cut off from one of the two guiding walls (16) .

23. Catching system according to one of the preceding claims,
**characterised**
**in that** grooves (24) running in one direction or crosswise are arranged in the lower surface and/or in the lateral surfaces of the absorber (7) or of the material (7a) or of the mat (7b) or also in the coating (8), the grooves in each case ending at the edge.

24. Method for avoiding ground contamination owing to an oil coming from a vehicle or an oil-containing liquid coming from the vehicle in the region of a vehicle parking place (5), in particular for railborne vehicles, in which method water, arising in the region of the parking place (5), and the oil or the oil-containing liquid are received in a receiving space (3) of a catching system (1) arranged in the region of the parking place (5) and are disposed of, the oil or the oil-containing liquid being separated from the water and collected and the water being passed on in the receiving space (3),
**characterised**
**in that** the water and the oil or the oil-containing liquid is brought into contact with an absorber (7) arranged in the receiving space (3) and the oil or the oil-containing liquid is absorbed by the absorber (7) and the water is repelled by the absorber (7).

25. Method according to Claim 24,
**characterised**
**in that** the water is drained into the ground.

26. Method according to Claim 24 or 25,
**characterised**
**in that** the oil or the oil-containing liquid or the absorber (7) with the absorbed oil or the absorbed liquid is or are removed or replaced and disposed of at specific time intervals.

## Revendications

1. Système collecteur (1) pour un parc de stationnement de véhicules (5), en particulier pour des véhicules roulant sur rails, comportant au moins un compartiment de réception (3), dans lequel est disposé un absorbeur hydrofuge (7) qui présente un matériau (7a) absorbant l'huile ou un liquide huileux, l'absorbeur (7) étant hydrofuge,
**caractérisé en ce que**
l'absorbeur (7) se compose d'une couche de matériau (7a), qui absorbe l'huile ou le liquide huileux, et **en ce qu'**il présente sur sa face supérieure ou sur ses faces latérales et/ou sur sa face inférieure un revêtement (8), qui est perméable à l'huile et au liquide huileux et qui est hydrofuge.

2. Système collecteur selon la revendication 1,
**caractérisé en ce que**
l'absorbeur (7) ou le revêtement (8) ou également le matériau (7a) est et/ou sont oléophile(s) et hydrophobe(s).

3. Système collecteur selon l'une quelconque des revendications 1 à 2,
**caractérisé en ce que**,
le matériau (7a) est un matériau fibreux, par exemple de la ouate de cellulose ou un mat ou un granulat.

4. Système collecteur selon la revendication 3,
**caractérisé en ce que**
le matériau fibreux présente des microfibres.

5. Système collecteur selon la revendication 4,
**caractérisé en ce que**
les microfibres présentent comme principal composant du polypropylène d'un poids volumique allant de 0,05 à 0,1 g/cm³, de préférence d'environ 0,075 g/cm³.

6. Système collecteur selon les revendications 1 ou 3,
**caractérisé en ce que**,
le revêtement (8) ou également le matériau fibreux ou le granulat est et/ou sont pourvu(s) d'une imprégnation ignifuge.

7. Système collecteur selon les revendications 1 ou 6,
**caractérisé en ce que**,
le revêtement (8) est relié au moins par endroits au matériau (7a) et forme une natte (7b), et est préfabriqué en particulier comme une natte (7b).

8. Système collecteur selon l'une quelconque des revendications précédentes 1 ou 6,
**caractérisé en ce que**,
le revêtement (8) entoure le matériau (7a) sur tous les côtés et est préfabriqué en particulier avec le matériau (7a) comme des coussins.

9. Système collecteur selon l'une quelconque des revendications précédentes,
**caractérisé en ce que**,
l'absorbeur (7) est recouvert d'un revêtement (13) rigide perméable aux liquides, de préférence une grille se prêtant à la circulation.

10. Système collecteur selon l'une quelconque des revendications précédentes,
**caractérisé en ce que**,
le compartiment de réception (3) est disposé dans un boîtier de réception (12), qui présente dans sa zone de fond inférieure au moins un orifice d'échappement (18) et au-dessus un revêtement (13).

11. Système collecteur selon la revendication 10,
**caractérisé en ce que**,
le revêtement (13) repose sur les parois latérales du boîtier de réception (12) ou sur des éléments de support (17) disposés à l'intérieur au niveau des parois latérales de boîtier.

12. Système collecteur selon la revendication 11,
**caractérisé en ce que**,
les éléments de support (17) sont réalisés d'un seul tenant avec les parois latérales, et sont formés de préférence par des languettes (17a) qui sont formées et repliées vers le haut à travers une entaille en U (17b) dans la paroi latérale, l'entaille (17b) s'étendant de préférence jusqu'à la paroi de fond (12a) du boîtier de réception (12).

13. Système collecteur selon l'une quelconque des revendications 10 à 12,
**caractérisé en ce que**,
deux rails (4a) espacés l'un de l'autre sont prévus pour le véhicule, et des compartiments de réception (3) avec des absorbeurs (7) contenus dans ceux-ci sont disposés entre les rails (4a) et sur le côté externe de ceux-ci respectivement de préférence dans un boîtier de réception (12).

14. Système collecteur selon la revendication 13,
**caractérisé en ce que**,
les boîtiers de réception (12) sont disposés à une distance (a) des rails (4a), et respectivement des parois de guidage (16) sont prévues, lesquelles s'étendent du bord supérieur des boîtiers de réception (12) en montant vers les rails correspondants (4a), et de préférence saisissent par le dessous leur champignon de rail (4b).

15. Système collecteur selon l'une quelconque des revendications 10 à 14,
**caractérisé en ce que**,
le boîtier de réception (12) et/ou les boîtiers de réception (12) est et/ou sont constitué(s) de façon modulaire de plusieurs parties de boîtiers de réception (12f).

16. Système collecteur selon la revendication 15,
**caractérisé en ce que**,
les parties de boîtiers de réception (12f) entre les rails (4a) sont disposées dans au moins deux rangées longitudinales (R1, R2) et à l'extérieur des rails (4a) dans respectivement au moins une rangée longitudinale (R3, R4).

17. Système collecteur selon les revendications 15 ou 16,
**caractérisé en ce que**,
les parties de boîtiers de réception (12f) sont réalisées de manière identique, ou **en ce que** les boîtiers de réception (12) disposés des deux côtés des rails (4a) sont réalisés symétriquement par rapport à un plan central longitudinal vertical des rails correspondants (4a).

18. Système collecteur selon l'une quelconque des revendications 15 à 17,
**caractérisé en ce que**,
les parties de boîtiers de réception (12f) sont disposées par rapport à un plan central vertical en étant inclinées à 180° les unes par rapport aux autres.

19. Système collecteur selon l'une quelconque des revendications 15 à 18,
**caractérisé en ce que**,
les joints de séparation (T1, T2) disposés entre les parties de boîtiers de réception (12f) sont étanches ou sont recouverts de pièces de recouvrement (16, 20).

20. Système collecteur selon la revendication 19,
**caractérisé en ce que**,
les pièces de recouvrement (20) dans la zone des parois latérales adjacentes des parties de boîtier de réception (12f) sont formées par des rails en U qui sont posés sur les parois latérales.

21. Système collecteur selon les revendications 17 ou 18,
**caractérisé en ce que**,
les joints de séparation (T1) entre les parois de guidage (16) sont recouverts par des plaques de recouvrement (21).

22. Système collecteur selon la revendication 21,
**caractérisé en ce que**,
les plaques de recouvrement (21) sont respectivement fixées sur un des deux boîtiers de réception (12) adjacents, elles sont soudées en particulier, ou sont coupées par une des deux parois de guidage (16).

23. Système collecteur selon l'une quelconque des revendications précédentes,
**caractérisé en ce que**,
des rainures (24) s'étendant dans une direction ou en croix, qui courent respectivement sur les bords, sont disposées dans la face inférieure et/ou dans les faces latérales de l'absorbeur (7) ou du matériau (7a) ou de la natte (7b) ou également dans le revêtement (8).

24. Procédé servant à éviter une pollution du sol par une huile s'échappant d'un véhicule ou un liquide huileux s'échappant du véhicule dans la zone d'un parc de stationnement de véhicules (5), en particulier pour des véhicules roulant sur rails, dans lequel l'eau, l'huile ou le liquide huileux apparaissant dans la zone du parc de stationnement (5) sont récupérés dans un compartiment de réception (3) d'un système collecteur (1) disposé dans la zone du parc de stationnement (5), et sont évacués,
l'huile ou le liquide huileux étant séparés de l'eau et récupérés dans le compartiment de réception (3), et l'eau étant transférée,
**caractérisé en ce que**,
l'eau et l'huile ou le liquide huileux entrent en contact avec un absorbeur (7) disposé dans le compartiment de réception (3), et l'huile ou le liquide huileux sont absorbés par l'absorbeur (7), et l'eau est détournée de l'absorbeur (7).

25. Procédé selon la revendication 24,
**caractérisé en ce que**,
l'eau est évacuée dans le sol.

26. Procédé selon les revendications 24 ou 25,
**caractérisé en ce que**,
l'huile ou le liquide huileux ou l'absorbeur (7) avec l'huile absorbée ou le liquide absorbé est et/ou sont prélevé(s) ou remplacé(s) et évacué(s) à des intervalles de temps définis.
